# EUROPEAN PATENT APPLICATION

(11) **EP 4 564 858 A2**
(43) Date of publication of application: **04.06.2025**
(21) Application number: 25162235.3
(22) Date of filing: 07.10.2021
(51) Int. Cl.: H04W 4/06

(54) **COMMUNICATION CONTROL METHOD**

(30) Priority: 16.10.2020 JP 2020174886
(62) Divisional of application: 21879970.8
(71) Applicant: Kyocera Corporation, Kyoto-shi, Kyoto 612-8501 (JP)
(72) Inventor: FUJISHIRO, Masato, Kyoto-shi, Kyoto, 612-8501 (JP)
(74) Representative: Viering, Jentschura & Partner mbB Patent- und Rechtsanwälte

(57) **Abstract**

A base station configured to receive multicast broadcast service (MBS) data from a core network apparatus, comprises a transmitter configured to transmit, to another base station, a handover request message including an identifier identifying an MBS session provided by the base station in multicast or broadcast and request information for data forwarding for the MBS session, and a receiver configured to receive, from the another base station, a handover response message including information related to the data forwarding, the information related to the data forwarding including a GTP-TEID of the another base station.

## Description

### TECHNICAL FIELD

The present disclosure relates to a communication control method used in a mobile communication system.

### BACKGROUND OF INVENTION

In recent years, a mobile communication system of the fifth generation (5G) has attracted attention. New Radio (NR), which is a Radio Access Technology (RAT) of the 5G System, has features such as high speed, large capacity, high reliability, and low latency compared to Long Term Evolution (LTE), which is a fourth generation radio access technology.

### CITATION LIST

### NON-PATENT LITERATURE

Non-Patent Document 1: 3GPP Technical Specification "3GPP TS 38.300 V16.3.0 (2020-09)"

### SUMMARY

A first aspect provides a communication control method used in a mobile communication system that provides a multicast broadcast service (MBS) from a base station to a user equipment. The communication control method includes receiving, at a first base station establishing an MBS connection with a core network apparatus, MBS data from the core network apparatus through the MBS connection, transmitting, from the first base station to a first user equipment in multicast or broadcast, the MBS data received from the core network apparatus, and transmitting, from the first base station to a second base station, at least one of a first identifier or a second identifier, the first identifier identifying the core network apparatus, the second identifier identifying an MBS session provided by the first base station in multicast or broadcast.

A second aspect provides a communication control method used in a mobile communication system that provides a multicast broadcast service (MBS) from a base station to a user equipment. The communication control method includes receiving, at a first base station from a core network apparatus, a notification including a first identifier and a second identifier, the first identifier identifying a second base station, the second identifier identifying an MBS session provided by the second base station in multicast or broadcast.

A third aspect provides a communication control method used in a mobile communication system that provides a multicast broadcast service (MBS) from a base station to a user equipment. The communication control method includes, in performing handover of a user equipment from a first base station to a second base station, transmitting, from the first base station to a core network apparatus, a notification indicating the handover of the user equipment being receiving an MBS.

### BRIEF DESCRIPTION OF THE DRAWINGS

FIG. 1 is a diagram illustrating a configuration of a mobile communication system according to an embodiment.
FIG. 2 is a diagram illustrating a configuration of a UE (user equipment) according to the embodiment.
FIG. 3 is a diagram illustrating a configuration of a gNB (base station) according to the embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating a correspondence relationship between a downlink Logical channel and a downlink Transport channel according to an embodiment.
FIG. 7 is a diagram illustrating a delivery method of MBS data.
FIG. 8 is a diagram illustrating an operation of the mobile communication system according to the embodiment.
FIG. 9 is a diagram illustrating an operation of the mobile communication system according to the embodiment.
FIG. 10 is a diagram illustrating an operation pattern 1 according to the embodiment.
FIG. 11 is a diagram illustrating an operation pattern 2 according to the embodiment.
FIG. 12 is a diagram illustrating an operation pattern 3 according to the embodiment.
FIG. 13 is a diagram illustrating an operation pattern 4 according to the embodiment.

### DESCRIPTION OF EMBODIMENTS

Introduction of multicast broadcast services to the 5G system (NR) has been under study. NR multicast broadcast services are desired to provide enhanced services compared to LTE multicast broadcast services.

The present invention provides enhanced multicast broadcast services.

A mobile communication system according to an embodiment is described with reference to the drawings. In the description of the drawings, the same or similar parts are denoted by the same or similar reference signs.

### Configuration of Mobile Communication System

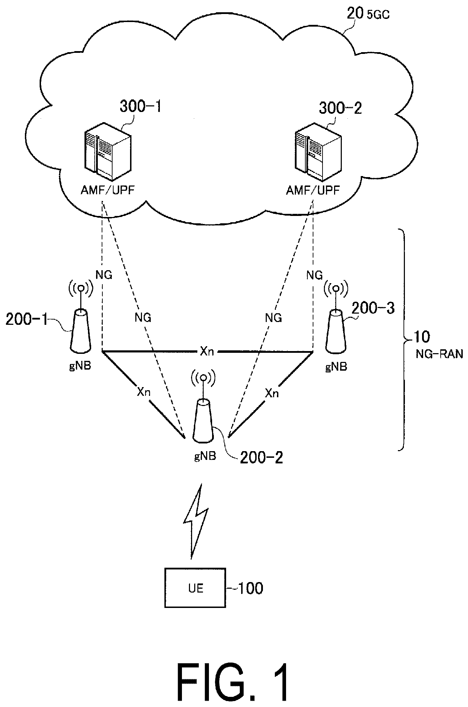

First, a configuration of a mobile communication system according to an embodiment is described. FIG. 1 is a diagram illustrating a configuration of a mobile communication system according to an embodiment. This mobile communication system complies with the 5th Generation System (5GS) of the 3GPP standard. The description below takes the 5GS as an example, but Long Term Evolution (LTE) system or the sixth generation (6G) system may be at least partially applied to the mobile communication system.

As illustrated in FIG. 1, the mobile communication system includes a user equipment (UE) 100, a 5G radio access network (next generation radio access network (NG-RAN)) 10, and a 5G core network (5GC) 20.

The UE 100 is a mobile wireless communication apparatus. The UE 100 may be any apparatus as long as utilized by a user. Examples of the UE 100 include a mobile phone terminal (including a smartphone), a tablet terminal, a notebook PC, a communication module (including a communication card or a chipset), a sensor or an apparatus provided on a sensor, a vehicle or an apparatus provided on a vehicle (Vehicle UE), or a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or a plurality of cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and/or the like. The "cell" is used as a term representing a minimum unit of wireless communication area. The "cell" is also used as a term representing a function or a resource for performing wireless communication with the UE 100. One cell belongs to one carrier frequency.

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

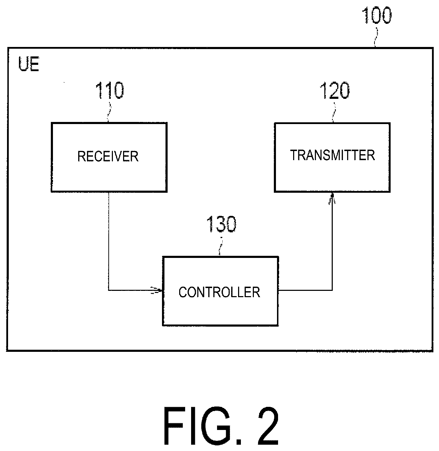

FIG. 2 is a diagram illustrating a configuration of the UE 100 (user equipment) to the embodiment.

As illustrated in FIG. 2, the UE 100 includes a receiver 110, a transmitter 120, and a controller 130.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal output by the controller 130 (a transmission signal) into a radio signal and transmits the resulting signal through the antenna.

The controller 130 performs various types of control in the UE 100. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

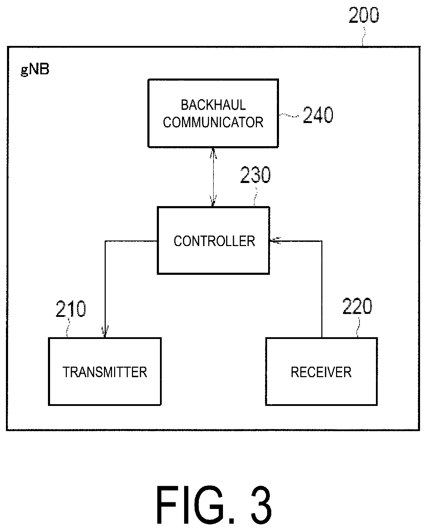

FIG. 3 is a diagram illustrating a configuration of the gNB 200 (base station) according to the embodiment.

As illustrated in FIG. 3, the gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts a baseband signal output by the controller 230 (a transmission signal) into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of controls for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. Note that the gNB may include a Central Unit (CU) and a Distributed Unit (DU) (i.e., functions are divided), and both units may be connected via an F1 interface.

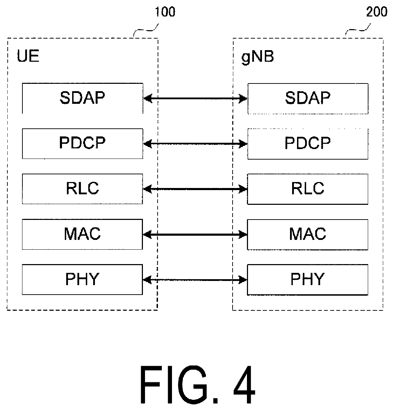

FIG. 4 is a diagram illustrating a configuration of a protocol stack of a radio interface of a user plane handling data.

As illustrated in FIG. 4, a radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel.

The MAC layer performs preferential control of data, retransmission processing using a hybrid ARQ (HARQ), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, modulation and coding schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression and decompression, and encryption and decryption.

The SDAP layer performs mapping between an IP flow as the unit of QoS control by a core network and a radio bearer as the unit of QoS control by an access stratum (AS). Note that, when the RAN is connected to the EPC, the SDAP may not be provided.

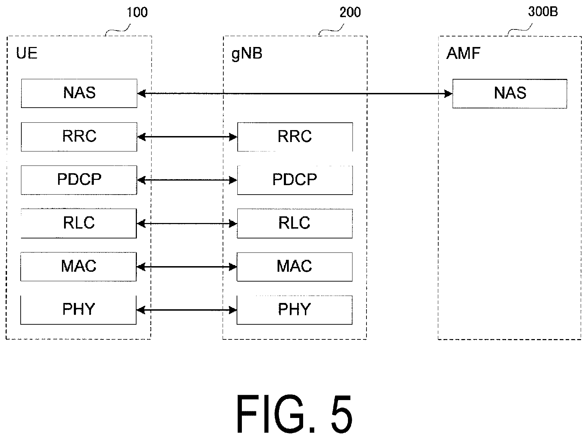

FIG. 5 is a diagram illustrating a configuration of a protocol stack of a radio interface of a control plane handling signaling (control signal).

As illustrated in FIG. 5, the protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, reestablishment, and release of a radio bearer. When a connection between the RRC of the UE 100 and the RRC of the gNB 200 (RRC connection) exists, the UE 100 is in an RRC connected state. When a connection between the RRC of the UE 100 and the RRC of the gNB 200 (RRC connection) does not exist, the UE 100 is in an RRC idle state. When the connection between the RRC of the UE 100 and the RRC of the gNB 200 is suspended, the UE 100 is in an RRC inactive state.

The NAS layer which is higher than the RRC layer performs session management, mobility management, and the like. NAS signaling is transmitted between the NAS layer of the UE 100 and the NAS layer of the AMF 300B.

Note that the UE 100 includes an application layer other than the protocol of the radio interface.

### MBS

An MBS according to an embodiment will be described. The MBS is a service in which the NG-RAN 10 provides broadcast or multicast, that is, point-to-multipoint (PTM) data transmission to the UE 100. The MBS may be referred to as the Multimedia Broadcast and Multicast Service (MBMS). Note that use cases (service types) of the MBS include public communication, mission critical communication, V2X (Vehicle to Everything) communication, IPv4 or IPv6 multicast delivery, IPTV, group communication, and software delivery.

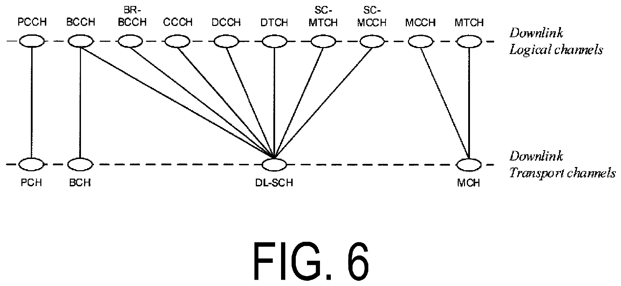

MBS Transmission in LTE includes two schemes, i.e., a Multicast Broadcast Single Frequency Network (MBSFN) transmission and Single Cell Point-To-Multipoint (SC-PTM) transmission. FIG. 6 is a diagram illustrating a correspondence relationship between a downlink Logical channel and a downlink Transport channel according to an embodiment.

As illustrated in FIG. 6, the logical channels used for MBSFN transmission are a Multicast Traffic Channel (MTCH) and a Multicast Control Channel (MCCH), and the transport channel used for MBSFN transmission is a Multicast Control Channel (MCH). The MBSFN transmission is designed primarily for multi-cell transmission, and in an MBSFN area including a plurality of cells, each cell synchronously transmits the same signal (the same data) in the same MBSFN subframe.

The logical channels used for SC-PTM transmission are a Single Cell Multicast Traffic Channel (SC-MTCH) and a Single Cell Multicast Control Channel (SC-MCCH), and the transport channel used for SC-PTM transmission is a Downlink Shared Channel (DL-SCH). The SC-PTM transmission is primarily designed for single-cell transmission, and corresponds to broadcast or multicast data transmission on a cell-by-cell basis. The physical channels used for SC-PTM transmission are a Physical Downlink Control Channel (PDCCH) and a Physical Downlink Control Channel (PDSCH), and enables dynamic resource allocation.

Although an example will be mainly described below in which the MBS is provided using the SC-PTM transmission scheme, the MBS may be provided using the MBSFN transmission scheme. An example will be mainly described in which the MBS is provided using multicast. Accordingly, the MBS may be interpreted as multicast. Note that, the MBS may be provided using broadcast.

MBS data refers to data transmitted by the MBS, an MBS control channel refers to the MCCH or SC-MCCH, and an MBS traffic channel refers to the MTCH or SC-MTCH. However, the MBS data may be transmitted in unicast. The MBS data may be referred to as MBS packets or MBS traffic.

The network can provide different MBS services for respective MBS sessions. The MBS session is identified by at least one of Temporary Mobile Group Identity (TMGI) or a session identifier, and at least one of these identifiers is referred to as an MBS session identifier. Such an MBS session identifier may be referred to as an MBS service identifier or a multicast group identifier.

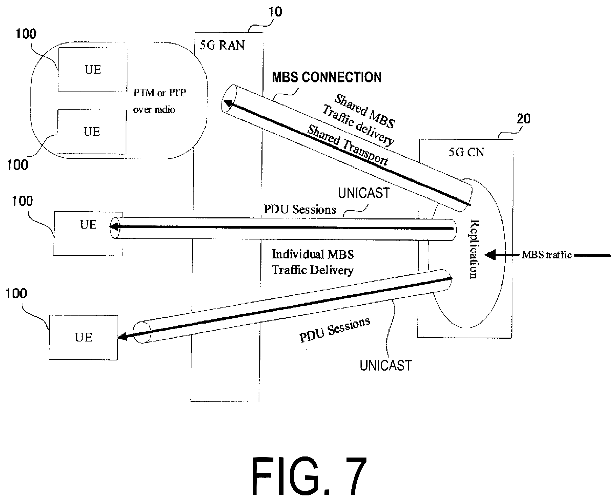

FIG. 7 is a diagram illustrating a delivery method of the MBS data.

As illustrated in FIG. 7, the MBS data (MBS traffic) is delivered from a single data source (application service provider) to a plurality of UEs. The 5G CN (5G) 20, which is a 5GC core network, receives the MBS data from the application service provider and performs replication of the MBS data to deliver the resultant.

From the perspective of the 5GC 20, two delivery methods are possible: shared MBS data delivery (shared MBS traffic delivery) and individual MBS data delivery (individual MBS traffic delivery).

In the shared MBS data delivery, a connection is established between the NG-RAN 10 that is a 5G radio access network (5G RAN) and the 5GC 20 to deliver the MBS data from the 5GC 20 to the NG-RAN 10. Such a connection (a tunnel) is hereinafter referred to as an "MBS connection".

The MBS connection may be referred to as a shared MBS traffic delivery connection or a shared transport. The MBS connection terminates at the NG-RAN 10 (i.e., the gNB 200). The MBS connection may correspond to an MBS session on a one to-one basis. The gNB 200 selects any of PTP (Point-to-Point: unicast) and PTM (Point-to-Multipoint: multicast or broadcast) according to its own determination, and transmits the MBS data to the UE 100 using the selected method.

On the other hand, in the individual MBS data delivery, a unicast session is established between the NG-RAN 10 and the UE 100 to individually deliver the MBS data from the 5GC 20 to the UE 100. Such unicast may be referred to as a PDU session. The unicast (PDU session) terminates at the UE 100.

### Operation of Mobile Communication System

In the embodiment, an operation of the mobile communication system is described.

As described above, in order for the gNB 200 to transmit the MBS data in multicast or broadcast, the gNB 200 needs to have an MBS connection with the NG RAN 10. Therefore, a problem may occur in a scenario in which the UE 100 in the RRC connected state receiving the MBS data performs handover.

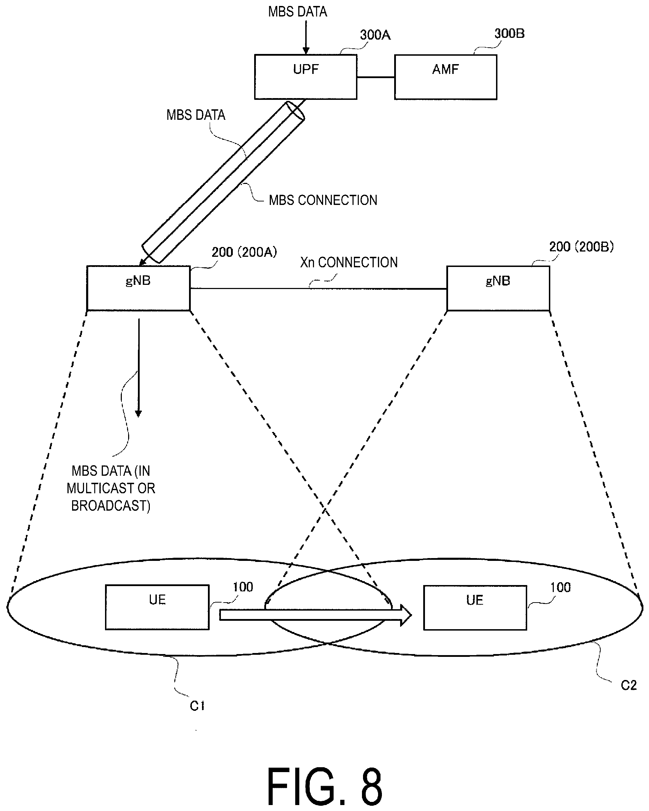

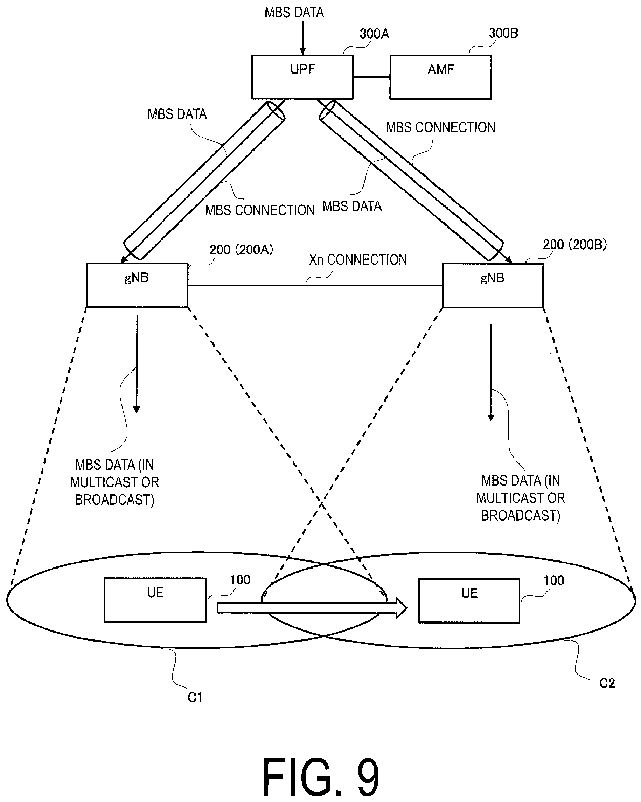

FIGs. 8 and 9 are diagrams illustrating an operation of the mobile communication system according to the embodiment.

As illustrated in FIG. 8, a gNB 200A serving as a source gNB has an MBS connection with a UPF 300A and receives MBS data from the UPF 300A via this MBS connection. The UPF 300A may be referred to as a multicast broadcast UPF (MB-UPF). The UPF 300A is an example of the core network apparatus.

An AMF 300B controls establishment and release of the MBS connection. The AMF 300B is another example of the core network apparatus. Note that, instead of the AMF 300B, an SMF (Session Management Function) may control the establishment and release of the MBS connection. The SMF is another example of the core network apparatus. The AMF 300B in the following description may be interpreted as the SMF.

The gNB 200A transmits, in multicast or broadcast, MBS data received from the UPF 300A. In a cell C1 of the gNB 200A, the UE 100 in the RRC connected state receives the MBS data. Assumed that the UE 100 moves from the cell C1 of the gNB 200A to a cell C2 of an adjacent gNB 200B.

The gNB 200B serving as a target gNB has no MBS connection with the UPF 300A. Here, when the UE 100 receiving the MBS (i.e., the UE 100 being receiving the MBS data transmitted in multicast or broadcast) performs handover from the gNB 200A to the gNB 200B, the UE 100 may fail to continue to receive the MBS data. For example, the MBS session received by the UE 100 is disconnected after the handover, and the UE 100 cannot continue to receive the MBS data.

Note that in the handover from gNB 200A to the gNB 200B, the handover preparation operation is performed via an Xn connection (Xn interface) between the gNB 200A and the gNB 200B. Note that the communication between the gNB 200A and the gNB 200B is not limited to those via the Xn interface, and that the communication between the gNB 200A and the gNB 200B may be performed via an NG interface and the core network apparatus, the NG interface being an interface between the base station and the core network. An example is mainly described below in which the communication between the gNB 200A and the gNB 200B is performed via the Xn interface.

As illustrated in FIG. 9, each of the gNB 200A and the gNB 200B has an MBS connection with the UPF 300A. The UPF 300A transmits the same MBS data to each of the gNB 200A and the gNB 200B via the MBS connection. Each of the gNB 200A and the gNB 200B transmits the MBS data received from the UPF 300A in multicast or broadcast.

In the situation illustrated in FIG. 9, even if the UE 100 being receiving the MBS (i.e., the UE 100 being receiving the MBS data transmitted in multicast or broadcast) performs handover from the gNB 200A to the gNB 200B, the UE 100 can continue to receive the MBS data.

Therefore, in order to improve the MBS data reception continuity for the UE 100 in the RRC connected state, the gNB 200A is desired to select a target gNB having the MBS connection for the handover of the UE 100 being receiving the MBS. The AMF 300B is desired to cause a target gNB not having an MBS connection to establish an MBS connection for the handover of the UE 100 being receiving the MBS.

### (1) Operation Pattern 1

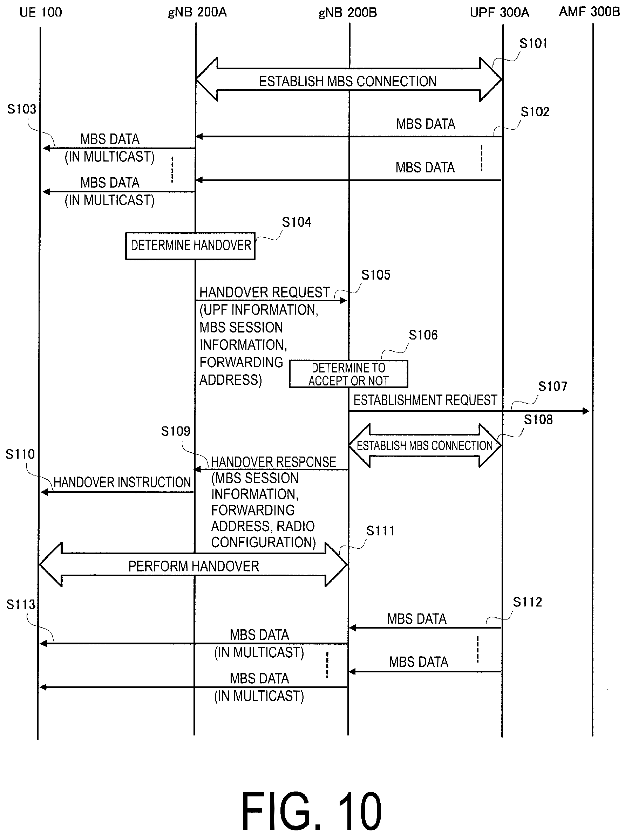

FIG. 10 is a diagram illustrating an operation pattern 1 according to the embodiment.

As illustrated in FIG. 10, in step S101, the gNB 200A establishes an MBS connection with the UPF 300A. The UE 100 in the RRC connected state establishes an MBS session through the gNB 200A.

In step S102, the UPF 300A transmits the MBS data via the MBS connection to the gNB 200A.

In step S103, the gNB 200A transmits the MBS data received from the UPF 300A to the UE 100 in multicast (or broadcast).

In step S104, the gNB 200A determines handover of the UE 100 to the gNB 200B, based on a measurement report from the UE 100, for example.

In step S105, the gNB 200A transmits a handover request message to the gNB 200B via the Xn interface (Xn connection). The handover request message includes at least one of a first identifier or a second identifier, the first identifier identifying the UPF 300A having an MBS connection with the gNB 200A, the second identifier identifying an MBS session (e.g., an MBS session being received by UE 100) provided by the gNB 200A in multicast or broadcast. The first identifier is UPF information and the second identifier is MBS session information. When a plurality of MBS sessions are provided by the gNB 200A in multicast or broadcast, the gNB 200A may include, in the handover request message, a plurality of second identifiers corresponding to the plurality of MBS sessions.

The first identifier identifying the UPF 300A may include at least one selected from the group consisting of an IP (Internet Protocol) address of the UPF 300A, a GTP TEID (GPRS tunneling protocol-tunnel endpoint identifier) of the UPF 300A, and an identifier indicating being the UPF 300A.

The second identifier identifying the MBS session provided by the gNB 200A in multicast or broadcast may include at least one selected from the group consisting of a group RNTI (Radio Network Temporary Identifier), a TMGI, a session ID, and a QoS (Quality of Service) flow ID.

When data forwarding is performed from the gNB 200A to the gNB 200B, the handover request message may include a data forwarding address for the MBS session. The data forwarding address for the MBS session includes at least one of an IP address of the gNB 200A or a GTP TEID of the gNB 200A.

The handover request message may include an information element requesting establishment of a data forwarding path for the MBS. The gNB 200B may notify the gNB 200A of a data forwarding address of the gNB 200B itself in response to receiving the information elements.

In step S106, the gNB 200B determines whether to accept the UE 100 based on the handover request message received from the gNB 200A. Here, the description is made on the assumption that the gNB 200B permits the acceptance. When the handover request message includes a plurality of second identifiers (i.e., information of a plurality of MBS sessions), the gNB 200B may determine whether to accept the UE 100 for each of the MBS sessions.

In step S107, the gNB 200B performs a process of establishing an MBS connection with the UPF 300A based on the identifier included in the handover request message from the gNB 200A. Here, the gNB 200B transmits, to the AMF 300B, at least one of the first identifier (UPF information) or the second identifier (MBS session information) included in the handover request message from the gNB 200A. For example, the gNB 200B, in transmitting a message for requesting establishment of an MBS connection to the AMF 300B, includes at least one of the first identifier or the second identifier in the message.

The AMF 300B receiving the first identifier can specify the UPF 300A with which the gNB 200B is to establish the MBS connection, based on the first identifier. The AMF 300B receiving the second identifier can specify the MBS session, which the gNB 200B is to establish, based on the second identifier. When the AMF 300B knows a correspondence relationship between the MBS session and the UPF 300A, the UPF 300A may specify the UPF 300A with which the gNB 200B is to establish the MBS connection, based on the second identifier.

The AMF 300B may notify the gNB 200B of the specified content. For example, in transmitting a response message to the gNB 200B in response to the establishment request message from the gNB 200B, the AMF 300B includes information indicating the content specified by the AMF 300B in the response message.

In step S108, the gNB 200B establishes an MBS connection (and MBS session) with the UPF 300A under control of the AMF 300B.

Note that the gNB 200B may perform steps S107 and S108 after step S109 described later.

In step S109, the gNB 200B transmits, to the gNB 200A, a handover response (Handover Request Acknowledgement) message indicating permission of the acceptance. The handover response message may include at least one of the information of an MBS session (second identifier) permitted to be accepted by the gNB 200B or the information of an MBS session (second identifier) rejected to be accepted by the gNB 200B.

Here, the handover response message may include a set of the information of an MBS session (second identifier) permitted to be accepted by the gNB 200B and information indicating whether the MBS session (MBS connection) is already established by the gNB 200B. The handover response message may include a set of the information of an MBS session (second identifier) rejected to be accepted by the gNB 200B and information indicating that the MBS session (MBS connection) has failed to be established by the gNB 200B.

When data forwarding is performed from the gNB 200A to the gNB 200B, the handover response message may include a data forwarding address for the MBS session. The data forwarding address for the MBS session includes at least one of an IP address of the gNB 200B or a GTP TEID of the gNB 200B.

The handover response message includes a radio configuration for the UE 100 to receive the MBS session from the gNB 200B in multicast or broadcast.

In step S110, the gNB 200A transmits a handover instruction (RRC Reconfiguration) message to the UE 100 in response to receiving the handover response message from the gNB 200B. The handover instruction message may include at least part of the information described above included in the handover response message (e.g., the information of the MBS session permitted to be accepted by the gNB 200B, the information of the MBS session rejected to be accepted by the gNB 200B, and the radio configuration).

In step S111, the UE 100 performs handover from the gNB 200A to the gNB 200B in response to receiving the handover instruction message from the gNB 200A.

The UE 100 may specify an MBS session rejected to be accepted by the gNB 200B, based on the information included in the handover instruction message, to establish a unicast (Individual MBS Traffic Delivery) connection corresponding to the MBS session. Here, in the UE 100, the information included in the handover instruction message may be notified from an AS layer to the NAS layer, and the unicast connection establishment process may be performed in the NAS layer. Here, the description is made on the assumption that the gNB 200B permits acceptance of at least one MBS session.

In step S112, the UPF 300A transmits the MBS data via the MBS connection to the gNB 200B.

In step S113, the gNB 200B transmits the MBS data received from the UPF 300A to the UE 100 in multicast (or broadcast). This allows the UE 100 to continue to receive the MBS data even after the handover.

### (2) Operation Pattern 2

An operation pattern 2 is described mainly focusing on differences from the operation pattern 1 described above.

In the above-described operation pattern 1, an example is described in which, in a situation where the gNB 200B serving as the target gNB does not have an MBS connection (MBS session), the gNB 200B is caused to establish an MBS connection at the time of the handover of the UE 100 being receiving the MBS. However, the gNB 200B is to start to anew transmit the MBS data in multicast or broadcast, consuming radio resources for this transmission.

When a handover of the UE 100 is performed to a target gNB that has already established an MBS connection and transmitted MBS data in multicast or broadcast, a UE 100 that has already received this MBS data exists, so the radio resources are efficiently used. Therefore, in the operation pattern 2, the gNB 200A serving as the source gNB recognizes in advance whether an adjacent gNB has the MBS connection, so that the UE 100 can be preferentially handed over to the target gNB having the MBS connection.

In the operation pattern 2, the gNB 200B transmits the second identifier (the above-described MBS session information) identifying the MBS session provided by the gNB 200B in multicast or broadcast to the gNB 200A. When a plurality of MBS sessions are provided by the gNB 200B in multicast or broadcast, the gNB 200B may transmit a plurality of second identifiers corresponding to the plurality of MBS sessions to the gNB 200A.

The gNB 200B may transmit the first identifier (UPF information) identifying the UPF 300A having the MBS connection with the gNB 200B to the gNB 200A.

The gNB 200A may determine a handover for the UE 100 (e.g., select a target gNB) based on at least one of the first identifier or the second identifier received from the gNB 200B.

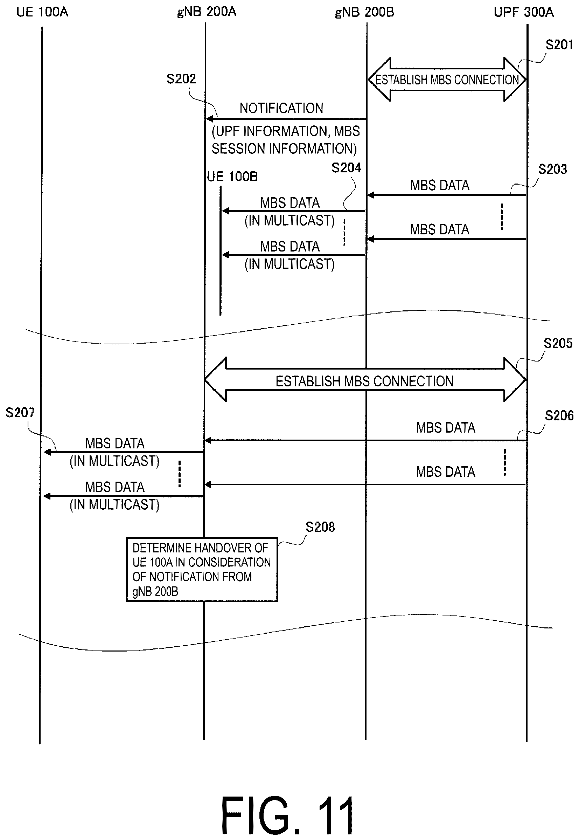

FIG. 11 is a diagram illustrating the operation pattern 2 according to the embodiment. In FIG. 11, assume that the UE 100A is in the RRC connected state in the cell of the gNB 200A. The UE 100B is in the RRC connected state, the RRC idle state, or the RRC inactive state in the cell of the gNB 200B.

As illustrated in FIG. 11, in step S201, the gNB 200B establishes an MBS connection with the UPF 300A.

In step S202, the gNB 200B transmits a notification message including at least one of the first identifier (UPF information) or the second identifier (MBS session information described above) to the gNB 200A, the first identifier identifying the UPF 300A having an MBS connection with the gNB 200B, the second identifier identifying an MBS session provided by the gNB 200B in multicast or broadcast. The notification message is transmitted via the Xn interface (Xn connection).

The gNB 200B may periodically (at a constant cycle) transmit the notification message. The gNB 200B may transmit the notification message in response to a change (establishment, disconnection) in the state of the MBS connection (MBS session). The gNB 200B may transmit the notification message in response to receiving a request to transmit the notification message from the gNB 200A.

In step S203, the UPF 300A transmits the MBS data via the MBS connection to the gNB 200B.

In step S204, the gNB 200B transmits the MBS data received from the UPF 300A to the UE 100B in multicast (or broadcast).

On the other hand, in step S205, the gNB 200A establishes an MBS connection with UPF 300A.

In step S206, the UPF 300A transmits the MBS data via the MBS connection to the gNB 200A.

In step S207, the gNB 200A transmits the MBS data received from the UPF 300A to the UE 100A in multicast (or broadcast).

In step S208, the gNB 200A determines a handover of the UE 100A, based on a measurement report from the UE 100, for example. Here, the gNB 200A determines whether to select the gNB 200B as the target gNB for the UE 100A handover based on the notification message received from the gNB 200B in step S202.

If the gNB 200B does not have an MBS session (MBS connection) that the gNB 200A is providing to the UE 100A in multicast (or broadcast), the gNB 200A may determine not to select the gNB 200B as the target gNB for the UE 100A handover.

If the gNB 200B does not have an MBS session (MBS connection) that the gNB 200A is providing to the UE 100A in multicast (or broadcast), the gNB 200A may perform handover control according to the operation pattern 1 described above. This can result in causing the gNB 200B to establish the MBS session (MBS connection) that the gNB 200A is providing to the UE 100A in multicast (or broadcast).

If the gNB 200B has an MBS session (MBS connection) that the gNB 200A is providing to the UE 100A in multicast (or broadcast), the gNB 200A may select the gNB 200B as the target gNB for the UE 100A handover. In this case, the gNB 200A may perform general handover control instead of the handover control according to the operation pattern 1 described above.

### (3) Operation Pattern 3

An operation pattern 3 is described mainly focusing on differences from the operation patterns 1 and 2 described above.

In the above-described operation pattern 2, an example is described in which the notification message regarding the MBS connection of gNB 200B is transmitted from the gNB 200B to the gNB 200A. In contrast, in the operation pattern 3, such a notification message is transmitted from the AMF 300B to the gNB 200A. In the operation pattern 3, the gNB 200A receives, from the AMF 300B, a notification message including an identifier identifying the gNB 200B and an identifier (the above-described MBS session information) identifying the MBS session (MBS connection) provided by the gNB 200B in multicast or broadcast.

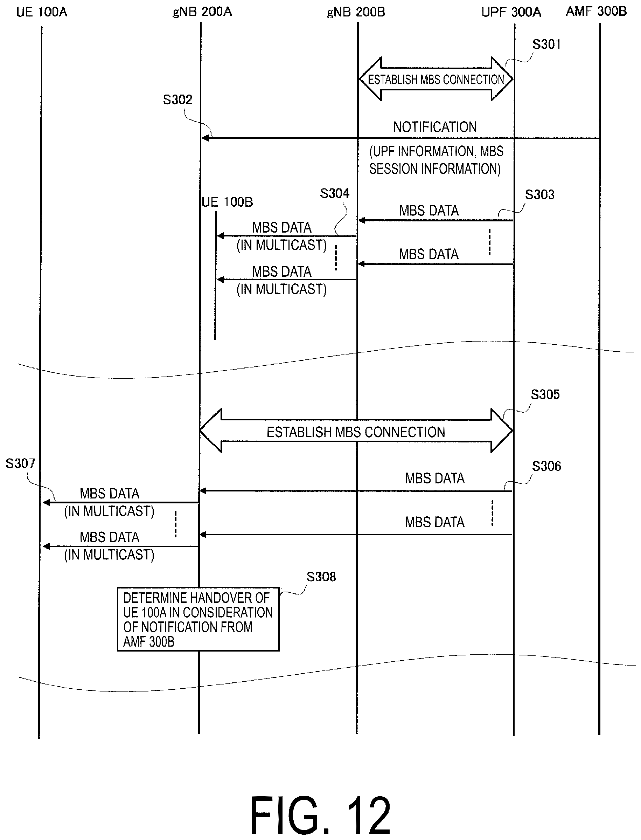

FIG. 12 is a diagram illustrating the operation pattern 3 according to the embodiment. In FIG. 12, assume that the UE 100A is in the RRC connected state in the cell of the gNB 200A. The UE 100B is in the RRC connected state, the RRC idle state, or the RRC inactive state in the cell of the gNB 200B.

As illustrated in FIG. 12, in step S301, the gNB 200B establishes an MBS connection with the UPF 300A.

In step S302, the AMF 300B transmits, to the gNB 200A, the notification message including the identifier identifying the gNB 200B and the identifier (the above-described MBS session information) identifying the MBS session (MBS connection) provided by the gNB 200B in multicast or broadcast. The identifier identifying the gNB 200B may be at least one of a gNB ID of the gNB 200B or a cell ID of the cell of the gNB 200B.

The AMF 300B may periodically (at a constant cycle) transmit the notification message. The AMF 300B may transmit the notification message in response to a change (establishment, disconnection) in the state of the MBS connection (MBS session). The AMF 300B may transmit the notification message in response to receiving a request to transmit the notification message from the gNB 200A.

In step S303, the UPF 300A transmits the MBS data via the MBS connection to the gNB 200B.

In step S304, the gNB 200B transmits the MBS data received from the UPF 300A to the UE 100B in multicast (or broadcast).

On the other hand, in step S305, the gNB 200A establishes an MBS connection with the UPF 300A.

In step S306, the UPF 300A transmits the MBS data via the MBS connection to the gNB 200A.

In step S307, the gNB 200A transmits the MBS data received from the UPF 300A to the UE 100A in multicast (or broadcast).

In step S308, the gNB 200A determines handover of the UE 100A, based on a measurement report from the UE 100, for example. Here, the gNB 200A determines whether to select the gNB 200B as the target gNB for the UE 100A handover based on the notification message received from the AMF 300B in step S302. The details of this operation are same as, and/or similar to, those of the operation pattern 2 described above.

### (4) Operation Pattern 4

An operation pattern 4 is described mainly focusing on differences from the operation patterns 1 to 3 described above.

In the above-described operation pattern 1, an example is described in which the gNB 200A takes the initiative to cause the gNB 200B to establish the MBS connection. In the operation pattern 4, the AMF 300B takes the initiative to cause the gNB 200B to establish an MBS connection. In the operation pattern 4, in performing handover for the UE 100 from the gNB 200A to the gNB 200B, the gNB 200A transmits, to the AMF 300B, a notification message indicating the handover of the UE 100 being receiving the MBS.

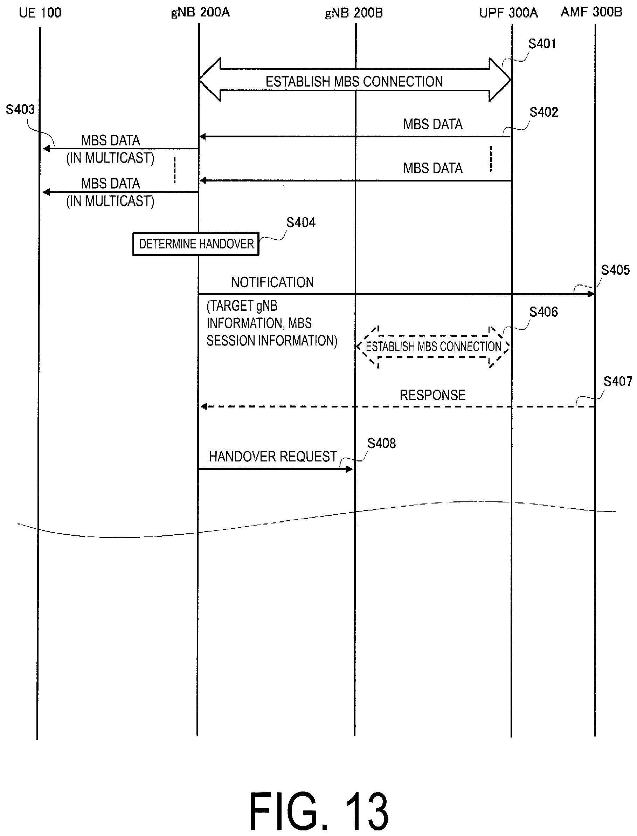

FIG. 13 is a diagram illustrating the operation pattern 4 according to the embodiment.

As illustrated in FIG. 13, in step S401, the gNB 200A establishes an MBS connection with the UPF 300A. The UE 100 in the RRC connected state establishes an MBS session through the gNB 200A.

In step S402, the UPF 300A transmits the MBS data via the MBS connection to the gNB 200A.

In step S403, the gNB 200A transmits the MBS data received from the UPF 300A to the UE 100 in multicast (or broadcast).

In step S404, the gNB 200A determines handover of the UE 100 to the gNB 200B, based on a measurement report from the UE 100, for example.

In step S405, the gNB 200A transmits, to the AMF 300B, a notification message indicating that the UE 100 being receiving the MBS session is to be handed over. Step S405 may be performed before step S404. The notification message includes an identifier (or cell ID) of at least one gNB that is a candidate for the target gNB and the above-mentioned MBS session information. The notification message may include an identifier of the UE 100 being receiving the MBS session.

In step S406, the AMF 300B may perform a process of establishing an MBS connection between the candidate gNB (gNB 200B) and the UPF 300A based on the notification message from the gNB 200A, as necessary.

In step S407, the AMF 300B may transmit a response message to the gNB 200A. The response message includes at least one of an identifier (or cell ID) of at least one gNB that is a candidate for the target gNB or the above-mentioned MBS session information. The identifier (or cell ID) of at least one gNB that is a candidate for the target gNB may be an identifier of a gNB which has established or is to establish an MBS connection. The gNB 200A may reselect the target gNB for the UE 100 handover based on the response message from of the AMF 300B.

In step S408, the gNB 200A transmits, to the gNB 200B, a handover request message requesting handover of the UE 100.

### Other Embodiments

The operation patterns described above can be separately and independently implemented, and also be implemented in combination of two or more of the operation patterns. For example, some steps of one operation pattern may be added to another operation pattern, or some steps of one operation pattern may be replaced with some steps of another operation pattern.

In the embodiment described above, an example in which the base station is an NR base station (i.e., a gNB) is described; however, the base station may be an LTE base station (i.e., an eNB). The base station may be a relay node such as an integrated access and backhaul (IAB) node. The base station may be a distributed unit (DU) of the IAB node.

Although inter-base station handover is mainly assumed in the above-described embodiment, intra-base station handover may also be assumed. For example, the base station may be separated into CUs and DUs, and the UE 100 may perform handover between two DUs belonging to one CU. In this case, the above-described Xn interface may be interpreted as an F1 interface serving as a CU-DU interface, and the above-described various messages and information may be transmitted and received via the F1 interface. Each of the above-described gNB 200A and gNB 200B may be interpreted as the CU and/or the DU.

Furthermore, the CU may be separated into a CU-CP and a CU-UP, and the UE 100 may perform handover between two CU-UPs belonging to one CU-CP. In this case, the above-described Xn interface may be interpreted as an E1 interface serving as an interface between the CU-CP and the CU-UP, and the above-described various messages and information may be transmitted and received via the E1 interface. Each of the above-described gNB 200A and gNB 200B may be interpreted as the CU-CP and/or the CU-UP.

A program causing a computer to execute each of the processes performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM.

Circuits for executing the processes to be performed by the UE 100 or the gNB 200 may be integrated, and at least part of the UE 100 or the gNB 200 may be configured as a semiconductor integrated circuit (a chipset or an SoC).

Embodiments have been described above in detail with reference to the drawings, but specific configurations are not limited to those described above, and various design variation can be made without departing from the gist of the present disclosure.

The present application claims priority to Japanese Patent Application No. 2020-174886 (filed on October 16, 2020), the contents of which are incorporated herein by reference in their entirety.

In the following, further embodiments of the present invention are disclosed:
1^{st} further embodiment: A communication control method used in a mobile communication system, the mobile communication system providing a multicast broadcast service (MBS) from a base station to a user equipment, the communication control method comprising:
   receiving, at a first base station configured to establish an MBS connection with a core network apparatus, MBS data from the core network apparatus through the MBS connection;
   transmitting, from the first base station to a first user equipment in multicast or broadcast, the MBS data received from the core network apparatus; and
   transmitting, from the first base station to a second base station, at least one of a first identifier or a second identifier, the first identifier identifying the core network apparatus, the second identifier identifying an MBS session provided by the first base station in multicast or broadcast.
2^{nd} further embodiment: The communication control method according to the 1^{st} further embodiment, further comprising
   determining, by the first base station, handover of the first user equipment from the first base station to the second base station, wherein
   the transmitting of at least one of the first identifier or the second identifier comprises transmitting, to the second base station, a handover request comprising at least one of the first identifier or the second identifier.
3^{rd} further embodiment: The communication control method according to the 2^{nd} further embodiment, further comprising
   establishing, based on the handover request by the second base station having received the handover request, an MBS connection with the core network apparatus.
4^{th} further embodiment: The communication control method according to the 3^{rd} further embodiment, wherein
   the establishing of the MBS connection with the core network apparatus comprises establishing, based on the first identifier, an MBS connection with the core network apparatus.
5^{th} further embodiment: The communication control method according to the 1^{st} further embodiment, further comprising
   determining, by the second base station, handover of a second user equipment from the second base station to the first base station, wherein
   the determining of the handover comprises determining the handover based on at least one of the first identifier or the second identifier received by the second base station from the first base station.
6^{th} further embodiment: The communication control method according to the 1^{st} further embodiment, wherein
   the second identifier is an identifier identifying an MBS session being received by the first user equipment.
7^{th} further embodiment: The communication control method according to the 1^{st} further embodiment, wherein
   the transmitting of at least one of the first identifier or the second identifier comprises transmitting a plurality of second identifiers to the second base station.
8^{th} further embodiment: The communication control method according to the 1^{st} further embodiment, wherein
   the second identifier comprises at least one selected from the group consisting of a group RNTI (Radio Network Temporary Identifier), a TMGI (Temporary Mobile Group Identity), a session ID, and a QoS (Quality of Service) flow ID.
9^{th} further embodiment. A communication control method used in a mobile communication system, the mobile communication system providing a multicast broadcast service (MBS) from a base station to a user equipment, the communication control method comprising:
   receiving, at a first base station from a core network apparatus, a notification comprising a first identifier and a second identifier, the first identifier identifying a second base station, the second identifier identifying an MBS session provided by the second base station in multicast or broadcast.
10^{th} further embodiment. The communication control method according to the 9^{th} further embodiment, further comprising
   determining, by the first base station, handover of a user equipment from the second base station to the first base station, wherein
   the determining of the handover comprises determining the handover based on the notification received at the first base station from the core network apparatus.
11^{th} further embodiment: A communication control method used in a mobile communication system, the mobile communication system providing a multicast broadcast service (MBS) from a base station to a user equipment, the communication control method comprising
   in performing handover of a user equipment from a first base station to a second base station, transmitting, from the first base station to a core network apparatus, a notification indicating the handover of the user equipment being receiving an MBS.

### REFERENCE SIGNS

10: NG-RAN (5G RAN)
20: 5GC (5G CN)
100: UE
110: Receiver
120: Transmitter
130: Controller
200: gNB
210: Transmitter
220: Receiver
230: Controller
240: Backhaul communicator
300A: UPF
300B: AMF

## Claims

1. A base station (200) configured to receive multicast broadcast service (MBS) data from a core network apparatus (300A, 300B), the base station (200) comprising:
a transmitter (210) configured to transmit, to another base station (200), a handover request message including an identifier identifying an MBS session provided by the base station (200) in multicast or broadcast and request information for data forwarding for the MBS session, and
a receiver (220) configured to receive, from the another base station (200), a handover response message including information related to the data forwarding, the information related to the data forwarding including a GTP-TEID of the another base station.

2. A base station (200) comprising:
a receiver (220) configured to receive, from another base station (200) configured to receive multicast broadcast service (MBS) data from a core network apparatus (300A, 300B), a handover request message being for handover of a user equipment (100) from the another base station (200) to the base station (200), and
a transmitter (210) configured to transmit, to the another base station (200), a handover response message, wherein
the handover request message includes an identifier identifying an MBS session provided by the another base station (200) in multicast or broadcast and request information for data forwarding for the MBS session, and
the handover response message includes information related to the data forwarding, the information related to the data forwarding including a GTP-TEID of the base station.

3. A communication control method used in a base station according to claim 1.

4. A communication control method used in a base station according to claim 2.

5. A mobile communication system comprising a base station according to claim 1 and a base station according to claim 2.
